Europäisches Patentamt
European Patent Office
Office européen des brevets

(11) Publication number: 0 011 833
A1

# EUROPEAN PATENT APPLICATION

(21) Application number: 79104670.9

(22) Date of filing: 23.11.79

(51) Int. Cl.³: C 08 F 283/06
C 08 F 4/32
//(C08F283/06, 220/06)

(30) Priority: 24.11.78 US 963408

(43) Date of publication of application: 11.06.80 Bulletin 80 12

(84) Designated Contracting States: AT BE DE FR GB IT NL SE

(71) Applicant: UNION CARBIDE CORPORATION
270, Park Avenue
New York, N.Y. 10017(US)

(72) Inventor: Knopf, Robert
900 Sunset Drive
St. Albans, West Virginia(US)

(72) Inventor: Drake, Kenneth
1561 Lewis Street
Charleston, West Virginia(US)

(74) Representative: Weinhold, Peter, Dr. Patentanwälte
Dipl.-Ing. P. Wirth Dr. V. Schmied-Kowarzik et al,
Dipl.-Ing. G. Dannenberg Dr. P. Weinhold, Dr. D. Gudel
Dipl.-Ing. S. Schubert Siegfriedstr. 8
D-8000 München 40(DE)

(54) **Carboxylated polyalkylene oxides and method for preparing the same.**

(57) Unique graft copolymers are obtained by grafting 3 to 15% by weight of acrylic acid onto poly(oxyalkylene) compounds.

EP 0 011 833 A1

Croydon Printing Company Ltd

This invention pertains to graft copolymers and more particularly to those having acrylic acid grafted onto poly(oxyalkylene) compounds in the presence of tertiary butyl perbenzoate or tertiary butyl hydroperoxide.

Poly(oxyalkylene) compounds including poly(oxyethylenes), poly(oxypropylenes) and copolymers thereof have been used as lubricants. However such compounds when used in aqueous formulations often settle out on standing which is undesirable in process operations.

Techniques for graft polymerizing ethylenically unsaturated monomers onto polymer backbones are known in the art. However the resultant graft copolymers are often seriously contaminated with by-products resulting from undesired side reactions. One common contaminant in such heterogeneous mixtures is homopolymer of the monomer used in the graft polymerization reaction.

There is a need for modified poly(oxyalkylene) compounds which possess a combination of the original properties of the unmodified poly(oxyalkylene) compounds plus new physical and/or chemical properties.

Graft copolymers of acrylic acid and a polyalkylene oxide have been made by a method which comprises adding a solution of polyalkylene oxide and 3 to 15% by weight, based on the weight of the total charge, of acrylic acid and a solution of a catalytic amount of t-butyl perbenzoate, di-t-butyl peroxide or t-butyl hydroperoxide in polyalkylene oxide to an agitated bath of polyalkylene oxide, whereby all of said components are intimately admixed, at a temperature of about 100°C to about 160°C and maintaining said temperature until a graft copolymer of acrylic acid on polyalkylene oxide is obtained, said polyalkylene oxide having the formula

$$R''[-(OC_nH_{2n})_zOR']_a$$

wherein R'' is a hydrocarbon radical containing up to 10 carbons, free of aliphatic unsaturation, and having a valence of a, a is an integer having a value of 1 to about 4, R' is a hydrogen atom or a monovalent hydrocarbon radical containing up to 6 carbons, free of aliphatic unsaturation, n has a value of 2 to 4 inclusive, and z is an integer having a value of about 8 to about 800.

The poly(alkylene oxide) compounds used to make the graft copolymers are known in the art. These are commonly produced by reacting an alkylene oxide or a mixture of alkylene oxides with an alcohol. Such

alcohols can be monohydric or polyhydric and correspond to the formula R" $(OH)_a$ wherein R" and a are as defined above. Such alcohols include methanol, ethanol, propanol, butanol, ethylene glycol, glycerol, the monoethylether of glycerol, the dimethyl ether of glycerol, sorbitol, 1,2,6-hexanetriol, trimethylolpropane, and the like.

Preferably, the poly(oxyalkylene) compounds used in this invention have molecular weights (number average) in the range to about 400 to about 35,000 and more preferably in the range to about 1500 to about 4000.

Although polymerization temperatures of about 100°C to 160°C can be used, it is preferred to use temperatures in the range of about 130°C to about 150°C. Polymerization temperatures above 160°C lead to the formation of undesirable by-products.

Unexpectedly it was found that homogeneous graft copolymers were obtained free of homopolymerized acrylic acid by limiting the acrylic acid monomer in the polymerization reactor zone to an upper limit of 15% based on the weight of poly(oxyalkylene) compound charged. This freedom from undesired homopolymerization is further enhanced by charging the reactants in two separate feed streams, the first consisting of poly(oxyalkylene) compound and acrylic acid and the second consisting of poly(oxyalkylene) compound containing the free radical polymerization initiator.

Efficient agitation coupled with an incremental addition of the two feed streams constitutes the most desirable technique for providing the graft copolymer free of homopolymerized acrylic acid.

It was also unexpected that methacrylic acid did not graft well to the poly(oxyalkylene) compounds, producing an undesirable heterogeneous mixture containing homopolymer of methacrylic acid.

The choice of free radical initiator is critical. Thus while t-butyl perbenzoate, di-t-butyl peroxide or t-butyl hydroperoxide afford the desired homogeneous graft copolymers, azobisisobutryonitrile does not, leading to heterogeneous mixtures.

The graft copolymers of this invention can be used as lubricants for metals, paper, textiles and the like.

The graft copolymerization reaction is preferably carried out in bulk without the use of an organic solvent. If desired however a solvent can be used which is nonreactive and inert to the reactants. Suitable organic solvents include aromatics, such as, benzene or tertiary-butylbenzene, aliphatics, such as, heptane, hexane or octane and mixtures thereof.

The invention is further described in the Examples which follow. All parts and percentages are by weight unless otherwise specified.

Example 1

An initial charge (640g.) of a butanol started ethylene oxide/propylene oxide (50/50 by weight) polyalkylene oxide having a viscosity of 5100 SUS (Seconds Universal Saybolt) was placed in a 2-liter resin kettle equipped with a stirrer, two 250-ml. dropping funnels, a reflux condenser, a thermometer and a thermoregulator. Two 4-bladed, 45° tilted, turbine impellers were mounted on a stirrer shaft; one positioned near the top of the liquid level and the other at the bottom of the kettle. Stirring was maintained at a rate sufficient to produce a good vortex. The two dropping funnels were positioned to deliver their contents above the liquid level of the reaction mixture, at opposite sides of the resin kettle. Both feeds from the funnels were adjusted to drop directly into the resin kettle, not down the walls.

The initial charge of polyalkylene oxide was brought to a temperature of 150°C with stirring. One dropping funnel was used to add a feed of 130 g. of the polyalkylene oxide described above and 50 g. of acrylic acid gradually, dropwise over a period of 1.5 hours. The other dropping funnel was used to add a feed of 180 g. of the polyalkylene oxide described above containing dissolved therein 2.5 g. of t-butyl perbenzoate also dropwise over a period of 1.5 hours. A post heat treatment also at 150°C was given to the stirred reactants for

1.0 hour. The hot product was transferred to a tared, 5-liter flask, where it was stripped with a rotary evaporator for 2.0 hours at 100°C at a vacuum of about 2 mm. $H_g$. The stripped product had an acid number of 35.26 (mg. of KOH required to neutralize one gram of sample). This corresponds to an acrylic acid content of 4.53% in the graft copolymer determined by the equation:

$$\% \quad \text{Acrylic Acid} = \frac{(\text{Acid Number})(0.1)(72.06)}{56.1}$$

The graft copolymer obtained was colorless, clear, and had a Brookfield Viscosity of 2600 cps at both 60 rpm and 6 rpm.

Example 2

Example 1 was repeated with the exception that the charge contained 3% by weight of acrylic acid instead of 5%. The resultant copolymer was colorless, and clear, and contained 2.72% acrylic acid grafted therein. The Brookfield Viscosity was 2400 cps at 60 rpm and 2300 cps at 6 rpm.

Example 3

Example 1 was repeated with the exception that the charge contained 8% by weight of acrylic acid instead of 5%. The resultant copolymer was colorless and clear and contained 7.1% acrylic acid grafted therein. The Brookfield Viscosity was 4800 cps at 60 rpm and 4500 cps at 6 rpm.

Example 4

Example 1 was repeated with the exception that the charge contained 10% by weight of acrylic acid instead of 5% acrylic acid. The resultant copolymer was faintly yellow, clear and contained 8.81% acrylic acid grafted therein. The Brookfield Viscosity was 7600 cps at 60 rpm and 7000 cps at 6 rpm.

Example 5

Example 1 was repeated with the exception that the charge contained 12.5% by weight of acrylic acid. The resultant copolymer was faintly yellow, with a slight haze and contained 10.73% by weight of acrylic acid grafted therein. The Brookfield Viscosity was > 10,000 at 60 rpm and 25,000 at 6 rpm.

Example 6

Example 1 was repeated with the exception that the charge contained 15% by weight of acrylic acid. The resultant copolymer was faintly yellow, very hazy and contained 12.82% acrylic acid. The Brookfield Viscosity was >10,000 at 60 rpm and 61,000 at 6 rpm.

Control A

Example 1 was repeated with the exception that the charge contained 20.0% by weight of acrylic acid. The

resultant copolymer was faintly yellow, opaque and contained 18.33% acrylic acid. The Brookfield Viscosity was $>$ 100,000 at 6 rpm and unmeasurable at 60 rpm.

Control B

Example 1 was repeated with the exception that the charge contained 5% by weight of methacrylic acid instead of 5% acrylic acid. The resultant product was white, opaque and indicated the presence of 4.00% methacrylic acid present. The Brookfield Viscosity was 6600 cps at 60 rpm and 9600 cps at 6 rpm.

Example 7

Example 1 was repeated with the exception that the polyalkylene oxide was a solid waxy polyethylene oxide (glycol started) having a molecular weight of about 7000. The resultant product was a yellow wax containing 4.5% acrylic acid grafted therein.

Example 8

Example 1 was repeated with the exception that the polyalkylene oxide was a glycerine started polyethylene oxide having a molecular weight of 1000. The resultant product was a clear yellow liquid containing 3.84% acrylic acid grafted therein having a Brookfield Viscosity of 550 cps at 60 rpm and 510 cps at 6 rpm.

Example 9

Example 1 was repeated with the exception that the polyalkylene oxide was a glycol started ethylene oxide/propylene oxide copolymer (75/25 weight ratio) having a molecular weight of 2500. The resultant product was a clear yellow liquid containing 4.46% acrylic acid grafted therein having a Brookfield Viscosity of 1040 cps at 60 rpm and 970 cps at 6 rpm.

Example 10

Example 1 was repeated with the exceptions that the polyalkylene oxide was a glycol started ethylene oxide/propylene oxide copolymer (75/25 weight ratio) having a molecular weight of 2500 and the charge contained 15% acrylic acid. The resultant product was a clear yellow liquid containing 12.52% acrylic acid grafted therein having a Brookfield Viscosity of 8000 cps at 60 rpm and 6700 cps at 6 rpm.

Example 11

Example 1 was repeated with the exceptions that the polyalkylene oxide was an ethylene oxide/propylene oxide copolymer (75/25 weight ratio) having a molecular weight of 980 and the charge contained 10% of acrylic acid. The resultant graft copolymer was a colorless clear liquid containing 7.93% acrylic acid having a Brookfield Viscosity of 310 cps at 60 rpm and 290 cps at 6 rpm.

Example 12

Example 1 was repeated with the exception that the polyalkylene oxide was a glycerine started ethylene oxide/propylene oxide copolymer (25/75 weight ratio) having a molecular weight of 3800. The resultant product was yellow and cloudy, contained 4.4% acrylic acid and had a Brookfield Viscosity of 1280 cps at 60 rpm and 1210 cps at 6 rpm.

Example 13

Example 1 was repeated with the exception that the polyalkylene oxide was propylene oxide (butanol started) having a molecular weight of 2400. The resultant graft copolymer was colorless and clear, contained 4.27% acrylic acid and had a Brookfield Viscosity of 2400 cps at 60 rpm and 2100 cps at 6 rpm.

Example 14

Example 1 was repeated with the exception that di-t-butyl peroxide was used in place of the t-butyl perbenzoate and 3% acrylic acid was used in the charge. A water white graft copolymer was obtained.

WHAT IS CLAIMED IS:

1. Method of preparing graft copolymers of acrylic acid and a polyalkylene oxide which comprises adding a solution of a polyalkylene oxide and 3 to 15% weight, based on the total charge weight, of acrylic acid, and a solution of a catalytic amount of t-butyl perbenzoate, di-t-butyl peroxide or t-butyl hydroperoxide in polyalkylene oxide to an agitated bath of polyalkylene oxide, whereby all of said components are intimately admixed at a temperature of about 100°C to about 160°C and maintaining said temperature until a graft copolymer of acrylic acid on said polyalkylene oxide is obtained, said polyalkylene oxide having the formula:

$$R''[-(OC_nH_{2n})_zOR']_a$$

wherein R'' is a hydrocarbon radical containing up to 10 carbons, free of aliphatic unsaturation, and having a valence of a, a is an integer having a value of 1 to about 4; R' is a hydrogen or a monovalent hydrocarbon radical containing up to 6 carbons, free of aliphatic unsaturation, n has a value of 2 to 4 inclusive, and z is an integer having a value of about 8 to about 800.

2. Method claimed in claim 1 wherein the polyalkylene oxide is derived from a mixture of ethylene oxide and propylene oxides.

3. Method claimed in claim 1 wherein the polyalkylene oxide is polyethylene oxide started with a saturated aliphatic alcohol having up to 4 carbons.

4. Method claimed in claim 1 wherein the polyalkylene oxide is propylene oxide started with a saturated aliphatic alcohol having up to 4 carbons.

5. Method claimed in one or more of the claims 1 - 4 where the catalyst is t-butyl perbenzoate.

6. Graft copolymers made by the method claimed in one or more of the claims 1 - 5.

European Patent Office

# EUROPEAN SEARCH REPORT

0011833
Application number
EP 79 10 4670

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| | US - A - 3 418 354 (M.L. WHEELER)<br>* Claims 1,2,3,8,10; column 2, line 51; column 3, lines 26-58 *<br>-- | 1-6 | C 08 F 283/06<br>C 08 F 4/32//<br>(C 08 F 283/06<br>C 08 F 220/06) |
| A | FR - A - 2 289 543 (UNION CARBIDE)<br>* Claim 1; page 4, line 29; page 3, line 21 *<br>-- | 1,2 | |
| | FR - A - 1 358 044 (BAYER)<br>* Abstract 1; page 4, left-hand column, paragraph 3; page 3, right-hand column, paragraph 2 *<br>-- | 1 | TECHNICAL FIELDS SEARCHED (Int.Cl. 3)<br>C 08 F 283/00<br>C 08 F 283/06 |
| | FR - A - 2 186 498 (DESOTO)<br>* Claims 1,6,10 *<br>---- | 1-4,6 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 15-02-1980 | MEULEMANS |